# EUROPÄISCHE PATENTSCHRIFT

(11) **EP 1 183 145 B1**
(45) Veröffentlichungstag und Bekanntmachung des Hinweises auf die Patenterteilung: **11.12.2002**
(21) Anmeldenummer: 00943775.7
(22) Anmeldetag: 07.06.2000
(51) Int. Cl.: B29C 49/00, B29C 49/04, B29C 47/20

(54) **VORRICHTUNG ZUM HERSTELLEN VON EXTRUSIONSBLASGEFORMTEN BEHÄLTERN MIT MINDESTENS ZWEI KAMMERN**
DEVICE FOR PRODUCING EXTRUSION BLOW-MOLDED CONTAINERS WITH AT LEAST TWO CHAMBERS
DISPOSITIF DE REALISATION DE RECIPIENTS A AU MOINS DEUX COMPARTIMENTS, PAR EXTRUSION-SOUFFLAGE

(30) Priorität: 09.06.1999 DE 19926329
(43) Veröffentlichungstag der Anmeldung: 06.03.2002
(73) Patentinhaber: Hansen, Bernd, 74429 Sulzbach-Laufen (DE)
(72) Erfinder: Hansen, Bernd, 74429 Sulzbach-Laufen (DE)
(74) Vertreter: Patentanwälte Bartels und Partner
(86) Internationale Anmeldenummer: EP0005224
(87) Internationale Veröffentlichungsnummer: WO00076745

(56) Entgegenhaltungen:
- WO-A-97/26126
- DE-B- 1 179 356
- US-A- 4 655 987
- PATENT ABSTRACTS OF JAPAN vol. 010, no. 378 (M-546), 17. Dezember 1986 (1986-12-17) & JP 61 171321 A (MAZDA MOTOR CORP), 2. August 1986 (1986-08-02)
- PATENT ABSTRACTS OF JAPAN vol. 011, no. 397 (M-655), 25. Dezember 1987 (1987-12-25) & JP 62 162517 A (TOSHIO TAKAGI), 18. Juli 1987 (1987-07-18)
- PATENT ABSTRACTS OF JAPAN vol. 005, no. 068 (M-067), 8. Mai 1981 (1981-05-08) & JP 56 019732 A (ARON KASEI CO LTD), 24. Februar 1981 (1981-02-24)

## Beschreibung

Die Erfindung bezieht sich auf eine Vorrichtung zum Herstellen von Behältern, gemäß den Merkmalen des Oberbegriffes des Patentanspruches 1.

Eine Vorrichtung vergleichbarer Art ist bereits aus der DE-A-1 179 356 bekannt. Als Führungseinrichtung für das eine innere Trennwand bildende Kunststoffmaterial ist bei der bekannten Vorrichtung eine unmittelbare Verbindung zwischen der stromabwärtigen Austrittsöffnung des Ringspaltes und dem sich im Düsenkern diametral erstreckenden Austrittsschlitz geringer Tiefe vorgesehen. Selbst wenn die im Endbereich des Ringspaltes herrschenden Reibungverhältnisse in engen Grenzen auf einem entsprechenden Sollwert gehalten werden, ist eine gleichbleibende gewünschte Materialstärke der gebildeten Trennwand im Betrieb kaum einzuhalten. Wenn zur Verbesserung der Strömungsverhältnisse der Austrittsschlitz von seiner Mitte nach beiden Enden hin, also zu den Abzweigstellen am Ringspalt hin, mit vergrößertem Querschnitt ausgebildet wird, besteht die Gefahr, daß die gebildete Trennwand im Zentralbereich eine geringere Stärke besitzt als in den Randbereichen.

Durch die US-A-4,655,987 ist eine mehrteilige Ringdüse für zu extrudierendes Kunststoffmaterial bekannt, wobei ein äußerer Düsenring in zylindrischer Bauweise konzentrisch einen inneren Düsenkern außenumfangsseitig umfaßt. Zwischen dem äußeren Düsenring und dem inneren Düsenkern sind vier diametral zueinander angeordnete kreisförmige Formschalen vorhanden, die mit ihren einander zugewandten Seitenflächen Längswände unter Einhalten eines Abstandes begrenzen, die während des Formvorgangs mit Kunststoff befüllt einzelne Kammern unterteilen zwischen einer zylindrischen äußeren und inneren Begrenzungswand eines kabelartig erhaltenen Kunststoff-Enderzeugnisses.

Durch die weitgehend konzentrische Anordnung und die damit einhergehenden definierten Abstände zwischen äußerem Düsenring und innerem Düsenkern läßt sich die bekannte Formvorrichtung nur schwer an unterschiedliche Gegebenheiten anpassen und demgemäß ist für jeden Anwendungszweck und jede Anwendungsform eine eigenständige Formdüse zur Verfügung zu stellen.

Ausgehend von diesem Stand der Technik liegt der Erfindung die Aufgabe zugrunde, eine Vorrichtung der besagten Art zu schaffen, die sich durch ein verbessertes Betriebsverhalten auszeichnet und im übrigen eine verbesserte Anpassung an unterschiedliche Anwendungsfälle auf einfache Weise ermöglicht.

Bei einer Vorrichtung der eingangs genannten Art ist diese Aufgabe erfindungsgemäße dadurch gelöst, daß der Düsenkern eine an ihn endseitig mit zentraler Verschraubung angeschraubte Kernspitze aufweist, in der der Austrittsschlitz ausgebildet ist, und daß die einander zugewandten Flächen der Kernspitze und des anschließenden Teils des Düsenkerns eine die zentrale Verschraubung umgebende Trichterfläche bzw. Kegelfläche bilden, die in einem Abstand voneinander angeordnet sind und einen den Verschraubungskern umgebenden, zur Düsenlängsachse schräg verlaufenden Einlaufbereich als Führungseinrichtung für das aus dem Ringspalt abzuzweigende Kunststoffmaterial bilden. Damit gestaltet sich die Anpassung an unterschiedliche Gegebenheiten auf besonders einfache Weise, indem lediglich die Kernspitze ausgewechselt wird oder diese so mit dem anschließenden Teil des Düsenkerns verschraubt wird, daß sich eine gewünschte Änderung des Querschnittes des Einlaufbereiches zwischen Trichterfläche der Kernspitze und der gegenüberliegenden Kegelfläche ergibt.

Darüber hinaus lassen sich durch einfache Wahl des Abstandes zwischen der Abzweigstelle und der Austrittsöffnung die gewünschten optimalen Strömungsverhältnisse für das in den Schlitz eintretende Kunststoffmaterial einstellen. Die sich zur stromabwärtigen Austrittsöffnung hin bewegende Kunststoffsäule weist einen beträchtlichen Druckgradienten auf und durch Ausnützen des höheren Druckniveaus läßt sich die gewünschte Versorgung des Austrittsschlitzes für die zu bildende Trennwand für die jeweiligen Viskositätseigenschaften des extrudierten Kunststoffmaterials gewährleisten.

Bei einem vorteilhaften Ausführungsbeispiel kann der Düsenkern als Führungseinrichtung für abgezweigtes, dem Austrittsschlitz zuzuführendes Kunststoffmaterial mindestens eine Querbohrung als Verbindung zwischen dem den Düsenkern umgebenden Ringspalt und dem jeweiligen Austrittsschlitz aufweisen, so daß zur Anpassung an unterschiedliche Verhältnisse lediglich Düsenkerne mit unterschiedlich angeordneten und dimensionierten Querbohrungen bereitgehalten zu werden brauchen, um unterschiedlichen Materialeigenschaften gerecht zu werden.

Nachstehend ist die Erfindung anhand der Zeichnung im einzelnen erläutert. Es zeigen:
- Fig. 1: eine perspektivische Ansicht eines mittels der erfindungsgemäßen Vorrichtung hergestellten Zweikammer-Behälters ohne eingefüllten Inhalt;
- Fig. 2: einen schematisch vereinfachten Längsschnitt einer Düsenanordnung einer Extrudereinrichtung eines Ausführungsbeispieles der erfindungsgemäßen Vorrichtung;
- Fig. 3: eine abgebrochen und schematisch vereinfacht gezeichnete Ansicht des Düsenkernes eines abgewandelten Beispieles einer Extrudereinrichtung der erfindungsgemäßen Vorrichtung;
- Fig. 4: eine Seitenansicht eines Zweikammerbehälters, bei dem am Behälterhals ein Verschluß für beide Kammern angeformt ist, der mittels eines Abrehknebels geöffnet werden kann;
- Fig. 5: eine teils aufgebrochene Draufsicht des Behälters von Fig. 4;
- Fig. 6: eine schematisch vereinfachte Darstellung eines Ausführungsbeispieles der erfindungsgemäßen Vorrichtung für die Bildung eines Zweikammerbehälters, wobei die Blasform geöffnet dargestellt ist, und
- Fig. 7 bis 9: Darstellungen der Vorrichtung entsprechend Fig. 6, wobei die Blasform jeweils geschlossen ist und unterschiedliche Arbeitsschritte bei der Ausbildung, dem Befüllen bzw. dem Verschließen des Behälters dargestellt sind.

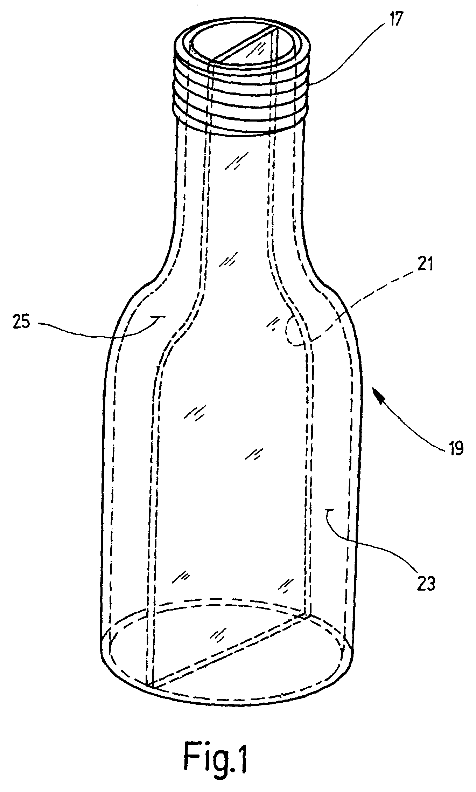

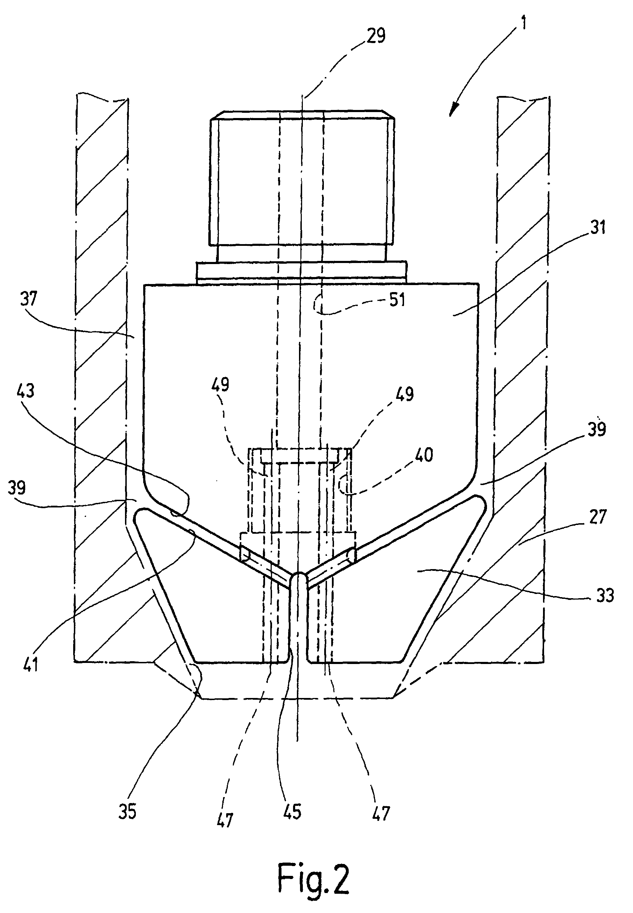

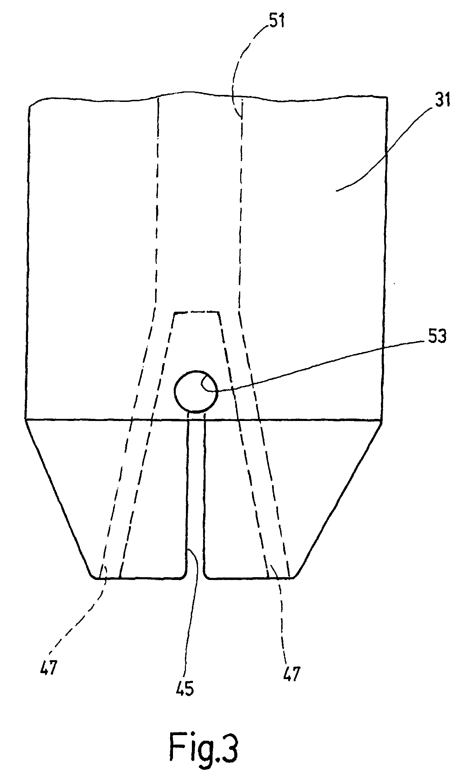

Fig. 1 zeigt in schematischer Darstellung einen mittels der erfindungsgemäßen Vorrichtung hergestellten Behälter 19, der eine durchgehende innere Trennwand 21 aufweist, die den Innenraum des Behälters 19 in zwei fluiddicht voneinander getrennte Kammern 23 und 25 unterteilt. In Fig. 2 und 3 sind wesentliche Teile einer Extrudereinrichtung 1 gezeigt, die in Zusammenwirkung mit einer in diesen Figuren nicht gezeigten Blasform Ausführungsbeispiele der erfindungsgemäßen Vorrichtung bilden, mittels deren ein Behälter 19 herstellbar ist, der, wie es in Fig. 1 gezeigt ist, eine innere Trennwand 21 aufweist.

Fig. 2 zeigt das der nicht gezeigten Blasform zugewandte Ende der Extrudereinrichtung 1 mit einem Düsenring 27, in dem koaxial zur Düsenlängsachse 29 ein Düsenkern 31 angeordnet ist, dessen Kernspitze 33 mit dem Endbereich des Düsenringes 27 einen ringförmigen Auslaß 35 definiert, aus dem extrudiertes Kunststoffmaterial in Form eines Schlauches austritt. Das aufgeschmolzene Kunststoffmaterial gelangt zum Auslaß 35 über einen zwischen Düsenring 27 und Düsenkern 31 gebildeten Ringspalt 37. Wie aus Fig. 2 zu erkennen ist, verengt sich dieser Ringspalt 37 am Übergang zwischen der Kernspitze 33 und dem sich stromaufwärts anschließenden Teil des Düsenkernes 31, so daß sich ein Staubereich 39 für das zugeführte Kunststoffmaterial ergibt.

Die Kernspitze 33 ist mit dem anschließenden, stromaufwärtigen Teil des Düsenkernes 31 über einen Zapfen mit Außengewinde 40 so verschraubt, daß die einander zugewandten Flächen von Kernspitze 33 und anschließendem Teil des Düsenkernes 31 in einem Abstand voneinander angeordnet sind. Die entsprechende Fläche der Kernspitze 33 bildet eine Trichterfläche 41, während die zugewandte Fläche des übrigen Düsenkernes 31 eine Kegelfläche 43 definiert. Diese Flächen 41 und 43, die bei dem gezeigten Beispiel zur Düsenlängsachse 29 Neigungswinkel von 65° bzw. 60° einschließen, bilden zwischen sich eine Führungseinrichtung für aus dem Ringspalt 37 abgezweigtes Kunststoffmaterial, das an der am Staubereich 39 gebildeten Abzweigstelle zwischen die Flächen 41 und 43 eintritt. Durch Bohrungen in dem das Außengewinde 40 aufweisenden Zapfen der Kernspitze 33 gelangt dieses abgezweigte Kunststoffmaterial in einen in der Vorderseite der Kernspitze 33 ausgebildeten Austrittsschlitz 45. Von dort tritt das abgezweigte Kunststoffmaterial als innerhalb des extrudierten Schlauches querverlaufende Bahn aus, die nach dem Aufweiten des Schlauches in dem dabei geformten Behälter 19 die Trennwand 21 (Fig. 1) bildet. Beidseits neben dem Austrittsschlitz 45, d.h. auf beiden Seiten der aus dem Austrittsschlitz 45 austretenden Kunststoffbahn, befinden sich in der Endfläche der Kernspitze 33 je eine Austrittsöffnung 47 für Stützluft, die über Zweigleitungen 49, die in dem das Außengewinde 40 aufweisenden Zapfen ausgebildet sind, mit einem zentralen Luftkanal 51 verbunden sind.

Die vom Luftkanal 51 her über die Austrittsöffnungen 47 zugeführte Luft ist als Stützluft vorgesehen, die lediglich das Zusammenfallen des extrudierten Schlauches und dessen Zusammenkleben mit der die Trennwand 21 bildenden Bahn verhindert. Das Aufweiten des Behälters in der Blasform erfolgt in einem zusätzlich Arbeitsschritt mittels eines Blas- und Fülldornes, welcher in analoger Anordnung zu den Austrittsöffnungen 47 der Kernspitze 33 Blasöffnungen für die Zufuhr aufweitender, vorzugsweise sterilisierter, Blasluft aufweist. Diese Blasöffnungen können anschließend auch als Füllöffnungen für die Zufuhr des Füllgutes zu den Behälterkammern 23, 25 dienen.

Fig. 3 zeigt den vorderen Endabschnitt eines abgewandelten Düsenkernes 31 ohne den ihn umgebenden Düsenring 27. Im Unterschied zum zuvor beschriebenen Beispiel weist der Düsenkern 31 keine aufgeschraubte, vordere Kernspitze auf, um in Zusammenwirkung mit dem anschließenden Teil des Düsenkernes die Führungseinrichtung für abzuzweigendes Kunststoffmaterial zu bilden. Vielmehr ist bei der Ausführungsform von Fig. 3 als Führungseinrichtung eine unmittelbare Verbindung zwischen dem endseitigen Austrittsschlitz 45 und dem den Düsenkern 31 umgebenden Ringspalt über Querbohrungen 53 vorgesehen, die sich im Düsenkern 31 quer zur Längsachse erstrecken und mit dem inneren, d.h. stromaufwärtigen Ende des Austrittsschlitzes 45 verbunden sind. Anzahl und Querschnitt der Querbohrungen 53 sind so gewählt, daß die gewünschte, aus dem äußeren Ringspalt abgezweigte Menge an Kunststoffmaterial aus dem Austrittsschlitz 45 als die Trennwand 21 bildende, im Inneren des Schlauches querverlaufende Bahn austritt. Wie beim zuvor beschriebenen Ausführungsbeispiel befinden sich beidseits neben dem Austrittsschlitz 45 Austrittsöffnungen 47 für Stützluft, die vom zentralen Luftkanal 51 her zugeführt wird.

Bei beiden Ausführungsbeispielen gemäß Fig. 2 und Fig. 3 läßt sich die Stärke der aus dem Austrittsschlitz 45 austretenden Bahn durch Wahl des Verhältnisses zwischen dem Düsenspalt, d.h. der Weite des innerhalb des Düsenringes gebildeten Ringspaltes 37, und der Breite des Austrittsschlitzes 45 einstellen. Beim Beispiel von Fig. 2 kann zudem der Abstand zwischen Trichterfläche 41 und Kegelfläche 43 für diese Einstellung variiert werden, ebenso das Ausmaß der Spaltverengung am Staubereich 39.

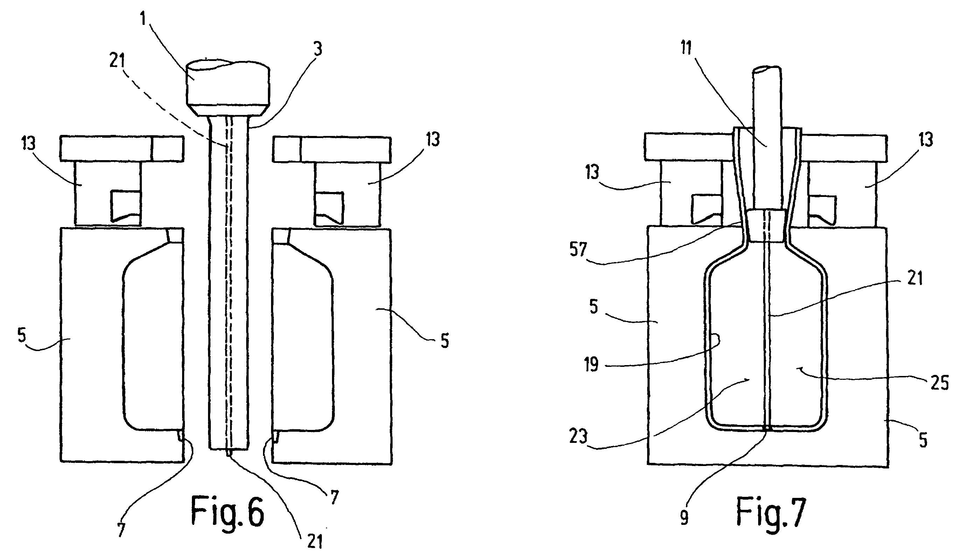

Es wird auf Fig. 6 bis 9 Bezug genommen. Der mittels der erfindungsgemäßen Vorrichtung hergestellte Behälter 19 kann, wenn es gewünscht wird, ebenso wie herkömmliche Einkammerbehälter noch innerhalb der Blasform 5 befüllt werden, bevor kopfseitige, obere Schweißbacken 13 an der Blasform zusammengefahren werden, um den Behälterhals 57 endseitig zu formen und gegebenenfalls durch Verschweißen zu verschließen. Wie oben bereits angedeutet, kann das Befüllen des Zweikammerbehälters 19 durch einen kombinierten Blas- und Fülldorn erfolgen, oder durch einen nur die Füllfunktion ausübenden Fülldorn, der für jede der Behälterkammern 23 und 25 eine Ausgabeöffnung für das Füllgut aufweist, wobei die Ausgabeöffnungen in gleicher Weise zur Längsachse des Fülldornes versetzt angeordnet sind, wie dies bei den Austrittsöffnungen 47 für Stützluft an den hier beschriebenen Düsenkernen 31 der Extrudereinrichtung 1 der Fall ist, wo die Austrittsöffnungen 47 beidseits neben dem die Trennwand 21 bildenden Austrittsschlitz 45 münden.

Wie oben erwähnt erfolgt die Formgebung des Behälterhalses der nach dem erfindungsgemäßen Verfahren hergestellten Behälter mittels oberer beweglicher Schweißbacken 13 an der betreffenden Blasform, siehe Fig. 6 bis 9. Bei dem in Fig. 1 gezeigten Beispiel des Behälters 19 wird hierbei ein Außengewinde 17 für einen Verschluß durch eine nicht gezeigte Schraubkappe hergestellt, die beide Behälterkammern 23 und 25 verschließt.

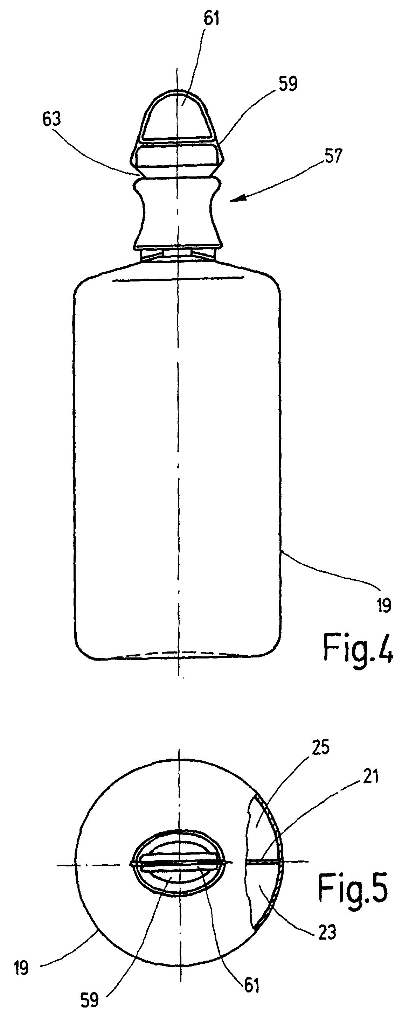

Anstelle der Ausbildung eines derartigen Schraubverschlusses kann durch die oberen Schweißbacken 13 eine andersartige Verschlußausbildung bei der Formgebung des Behälterhalses in der Weise erfolgen, wie es in der einschlägigen Technik bei Einkammerbehältern beispielsweise entsprechend dem bottelpack®-System bekannt ist. So kann, wie es in Fig. 4 und 5 gezeigt ist, am Behälterhals 57 beispielsweise ein Drehknebelverschluß geformt werden. Hierbei wird der Schweißvorgang so durchgeführt, daß beide Kammern 23 und 25 durch einen Abdrehknebel 59 verschlossen sind, der an einer als Sollbruchstelle ausgebildeten Trennstelle 63 abtrennbar ist, indem er mit Hilfe seines angeformten Griffstückes 61 verdreht wird.

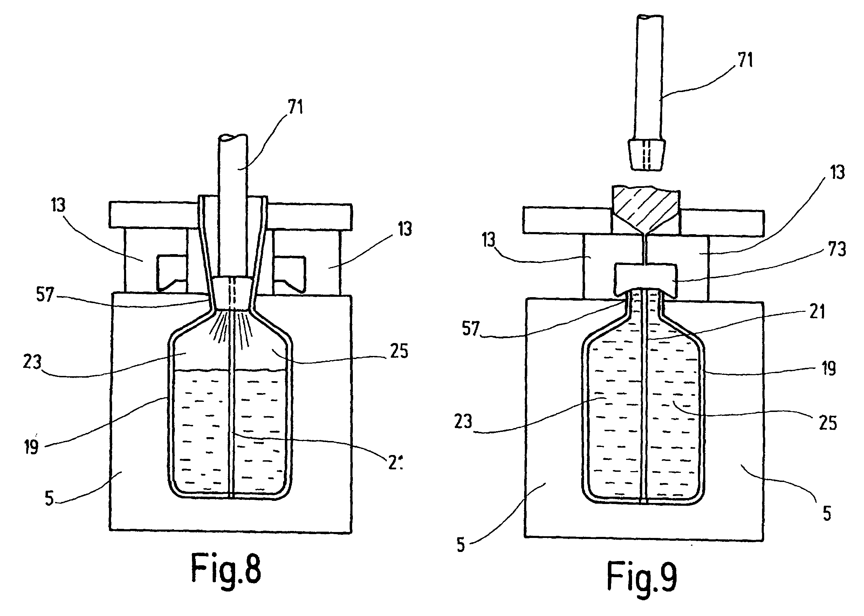

Die Fig. 6 bis 9 zeigen in jeweils stark schematisch vereinfacht gezeichneter Darstellung den Ablauf der Arbeitsschritte vom anfänglichen Extrusionsvorgang des Kunststoffmaterials bis zur vollständigen Herstellung eines Zweikammer-Kunststoffbehälters, dessen beide Kammern 23 und 25 befüllt und mittels eines Drehknebelverschlusses 73 (Fig. 9) hermetisch abgeschlossen sind. So zeigen Fig. 6 und 7 das Extrudieren des Schlauches 3 mit innerer Trennwand 21 in die geöffnete Blasform 5 bzw. das Aufweiten zum Behälter 19 mittels Blasluft, die durch den Blasdorn 11 beidseits der Trennwand 21 eingeblasen wird, nachdem (siehe Fig. 7) die Blasform 5 geschlossen wurde und dadurch die bodenseitigen Schweißkanten 7 einen Trennschweißvorgang durchgeführt haben, durch den der Schlauch 3 am unteren Ende verschlossen und mit dem Ende der Trennwand 21 an einer Schweißnaht 9 verbunden wird.

Nach Zurückziehen des Blasdornes 11 und Einführen eines Fülldornes 71, der für jede durch die Trennwand 21 getrennte Behälterkammer 23 und 25 je eine Füllöffnung aufweist, werden nun beide Kammern 23 und 25 befüllt, während sich der Behälter 19 noch innerhalb der Blasform 5 befindet (Fig. 8).

Nach erfolgtem Befüllen wird der Fülldorn 71 zurückgezogen, und die oberen Schweißbacken 13 werden zusammengefahren, um am Behälterhals 57 einen weiteren Schweißvorgang durchzuführen, bei dem der Behälterhals 57 endgültig geformt und bei dem hier gezeigten Beispiel gleichzeitig mit einer beide Kammern 23 und 25 hermetisch abschließenden Verschlußeinrichtung versehen wird. Bei dem in Fig. 9 gezeigten Beispiel wird hierbei ein Drehknebelverschluß 73 ausgebildet, so daß der Behälterhals in der Art gestaltet wird, wie dies in Fig. 4 und 5 gezeigt ist, wo ein Abdrehknebel 59 mit einem Griffstück 61 gezeigt ist, das es ermöglicht, den Knebel 59 an einer Trennstelle 63 abzudrehen, wodurch beide Kammern 23 und 25 des Behälters 19 geöffnet werden.

Nach dem Füllen des Behälters und dem Zurückziehen des Fülldornes 71 können, wenn dies gewünscht wird, vor dem hermetischen Verschließen des Behälters Einlegeteile in den Behälterhals 57 eingebracht werden. Dabei kann es sich um Funktionsteile wie einen Tropfeinsatz, einen Gummistopfen, eine Kanüle oder ein sonstiges Fremdteil handeln, die mittels Vakuumgreifer eingelegt werden können, bevor die Schweißbacken zusammengefahren werden, um das Einlegeteil zu umschweißen und gleichzeitig einen hermetischen Verschluß zu bilden.

Während die Erfindung vorstehend anhand der Herstellung eines Zweikammerbehälters beschrieben ist, versteht es sich, daß am Düsenkern 31 der Extrudereinrichtung 1 mehr als ein Austrittsschlitz 45 vorgesehen sein könnte, um mehr als eine Kunststoffbahn zu extrudieren. Innerhalb des Kunststoffschlauches können so mehrere Trennwände gebildet werden, zu deren beiden Seiten jeweils Blasluft zugeführt wird, um in der betreffenden Blasform einen Mehrkammerbehälter zu formen.

Bei der endgültigen Ausbildung des Behälterhalses 57 können auch für beide Kammern 23 und 25 je ein eigener Verschluß ausgebildet werden.

## Patentansprüche

1. Vorrichtung zum Herstellen von Behältern (19), deren Innenraum durch zumindest eine Trennwand (21) in gesonderte Behälterkammern (23, 25) unterteilt ist, mit einer Extrudereinrichtung (1), um einen Schlauch (3) aus plastifiziertem Kunststoffmaterial aus dem Ringspalt (37) zwischen einem äußeren Düsenring (27) und einem inneren Düsenkern (31) zu extrudieren, welcher eine Führungseinrichtung (41, 43; 53) für aus dem Ringspalt (37) abgezweigtes Kunststoffmaterial sowie zumindest einen endseitigen Austrittsschlitz (45) aufweist, aus dem das abgezweigte Kunststoffmaterial als sich innerhalb des extrudierten Schlauches (3) durchgehend erstreckende Trennwand (21) austritt, und mit einer Schweiß- und Formeinrichtung (5, 7, 13), mittels deren das Ende des Schlauches (3) durch Verschweißen verschlossen wird und durch Erzeugen eines am Schlauch wirksamen pneumatischen Druckgradienten dieser aufgeweitet und zur Bildung des Behälters (19) an eine formgebende Wand der Formeinrichtung angelegt wird, wobei die Führungseinrichtung (41, 43; 53) für das abgezweigte Kunststoffmaterial in einem Bereich des Ringspaltes (37) gelegen ist, der sich stromaufwärts in einem Abstand vom Austrittsende des Austrittsschlitzes (45) befindet, **dadurch gekennzeichnet, daß** der Düsenkern (31) eine an ihn endseitig mit zentraler Verschraubung (40) angeschraubte Kernspitze (33) aufweist, in der der Austrittsschlitz (45) ausgebildet ist, und daß die einander zugewandten Flächen der Kernspitze (33) und des anschließenden Teiles des Düsenkernes (31) eine die zentrale Verschraubung (40) umgebende Trichterfläche (41) bzw. Kegelfläche (43) bilden, die in einem Abstand voneinander angeordnet sind und einen den Verschraubungskern umgebenden, zur Düsenlängsachse (29) schräg verlaufenden Einlaufbereich als Führungseinrichtung für das aus dem Ringspalt (37) abzuzweigende Kunststoffmaterial bilden.

2. Vorrichtung nach Anspruch 1, **dadurch gekennzeichnet, daß** der Düsenkern (31) als Führungseinrichtung für abgezweigtes, dem Austrittsschlitz (45) zuzuführendes Kunststoffmaterial mindestens eine Querbohrung (53) als Verbindung zwischen dem den Düsenkern (31) umgebenden Ringspalt (37) und dem jeweiligen Austrittsschlitz (45) aufweist.

3. Vorrichtung nach Anspruch 1 oder 2, **dadurch gekennzeichnet, daß** das aus dem Ringspalt (37) abzuzweigende Kunststoffmaterial über zugeordnete Durchgänge im Kern der Verschraubung (40) zum Austrittsschlitz (45) gelangt.

4. Vorrichtung nach einem der Ansprüche 1 bis 3, **dadurch gekennzeichnet, daß** die Kernspitze (33) in ihrem stromaufwärtigen Endbereich einen etwas größeren Durchmesser besitzt als der anschließende Teil des Düsenkernes (31), so daß eine Verengung (39) im Ringspalt (37) an der Eintrittsstelle des abzuzweigenden Kunststoffmaterials gebildet wird.

5. Vorrichtung nach einem der Ansprüche 1 bis 4, **dadurch gekennzeichnet, daß** der Düsenkern (31) beidseits neben dem Austrittsschlitz (45) Austrittsöffnungen (47) für Stützluft aufweist.

6. Vorrichtung nach Anspruch 5, **dadurch gekennzeichnet, daß** der Kern der Verschraubung (40) der Kernspitze (33) Zweigleitungen (49) für die Verbindung eines zentralen Luft-Zuführkanales (51) mit den Austrittsöffnungen (47) aufweist.

7. Vorrichtung nach einem der Ansprüche 1 bis 6, **dadurch gekennzeichnet, daß** als Schweiß- und Formeinrichtung eine Blasform (5, 7, 13) vorgesehen ist, daß der Schlauch (3) durch die Extrudereinrichtung (1) von oben her in die geöffnete Blasform (5) hinein extrudierbar ist, daß das beim Extrudieren vordere Ende des Schlauches (3) und das vordere Ende jeder inneren Trennwand (21) beim Schließen der Blasform (5) durch bodenseitige Schweißkanten (7) derselben mit jeder Trennwand (21) verschweißt wird, um den mit jeder Trennwand verbundenen Behälterboden zu schließen, und daß an der Blasform (5) obere bewegliche Schweißbacken (13) vorgesehen sind, um den beim Schließen der Blasform (5) am oberen Ende derselben gebildeten Behälterhals (57) fertig zu formen und gegebenenfalls durch Verschweißen zu verschließen.

## Claims

1. Device for producing containers (19) the inner space of which is divided into separate container chambers (23, 25) by at least one separating wall (21), with an extruder (1) for extruding a hose (3) from a plasticized plastic material from the annular gap (37) between an outer nozzle ring (27) and an inner nozzle core (31), the said nozzle being provided with guide means (41, 43; 53) for the plastic material branched-off from the annular gap (37) and with at least one outlet port (45) at the end from which the branched-off plastic material exits in the form of a continuous separating wall extending within the extruded tube (3), and with a welding and moulding device (5, 7, 13) by means of which the end of the hose (3) is closed by welding and widened out, producing air pressure gradient acting on the hose, and applied to a shaping wall of the moulding device, whereby the guide means (41, 42, 53) for the branched plastic material is positioned in a zone of the annular gap (37) upstream of and at a distance from the outlet end of the outlet port (45), **characterised in that** the nozzle core (31) has a core tip (33) screwed onto it with a central threaded union (40), the said core tip having an outlet slot (45), and **in that** the faces of the core tip (33) facing each other and of the adjoining part of the nozzle core (31) form a funnel face (41) or a conical face (43) surrounding the central threaded union (40), which are arranged at a distance from each other and form an inlet zone extending obliquely to the longitudinal axis of the nozzle (29) as a guide means for the plastic material to be branched off from the annular gap (37).

2. Device according to claim 1, **characterised in that** the nozzle core (31), being a guide means for the branched-off plastic material which is to be fed to the outlet port (45), has at least one cross hole (53) as a connection between the annular gap (37) surrounding the nozzle core (31) and the respective outlet port (45).

3. Device according to claim 1 or 2, **characterised in that** the plastic material to be branched off from the annular gap (37) reaches the outlet port (45) through associated passages in the core of the threaded union (40).

4. Device according to claims 1 to 3, **characterised in that** the core tip (33) has a slightly larger diameter in its upstream end zone than the adjoining part of the nozzle core (31) thus forming a constriction (39) in the annular gap (37) at the entry point of the plastic material which is to be branched off.

5. Device according to one of the claims 1 to 4, **characterised in that** the nozzle core (31) has outlets (47) for supporting air on both sides next to the outlet port (45).

6. Device according to claim 5, **characterised in that** the core of the threaded union (40) of the core tip (33) has branch lines (49) for connecting a central air feed port (51) with the outlets (47).

7. Device according to one of the claims 1 to 6, **characterised in that** a blow mould (5, 7, 13) is provided as the welding and moulding device, that the hose (3) is extruded through the extruder (1) from above down into the open blow mould (5), that the end of the hose (3) which is the leading end during extruding and the leading end of each separating wall (21) is welded with each inside separating wall by the welding edges (7) at the bottom of the blow mould (5) as it closes, to close the bottom of the container connected with each separating wall, and that top moving welding jaws (13) are provided at the blow mould (5) to impart a finished shape to the container neck (57) moulded at the top end of the blow mould (5) as it closes, and to close it by welding if necessary.

## Revendications

1. Dispositif de réalisation de récipients (19), dont l'intérieur est subdivisé au moins par une paroi (21) en deux compartiments de récipient (23, 25) séparés, avec un dispositif d'extrusion (1) pour extruder un tube (3) en matière plastique plastifiée du jeu annulaire (37) entre un anneau extérieur de filière (27) et un noyau intérieur de filière (31), qui comporte un dispositif de guidage (41, 43 ; 53) pour la matière plastique déviée du jeu annulaire (37) ainsi qu'au moins un canal de sortie côté extrémité (45), duquel la matière plastique déviée sort sous forme de paroi (21) s'étendant sur tout l'intérieur du tube (3) extrudé, et avec un dispositif de soudage et de moulage (5, 7, 13) au moyen duquel l'extrémité du tube (3) est fermée par soudage et, par génération d'un gradient de pression pneumatique actif au niveau du tube, ce dernier est évasé et, pour former le récipient (19), est appliqué sur une paroi de moulage du dispositif de moulage, le dispositif de guidage (41, 43 ; 53) de la matière plastique dévié étant situé dans une zone du jeu annulaire (37) qui se trouve en amont à distance de l'extrémité de sortie du canal de sortie (45), **caractérisé en ce que** le noyau de filière (31) comporte une pointe noyau (33) vissée à l'extrémité de ce dernier par un raccord central (40), dans laquelle est formé le canal de sortie (45), et que les surfaces en vis-à-vis de la pointe noyau (33) et de la partie de raccordement du noyau de filière (31) forment une surface en entonnoir (41) ou une surface conique (43) entourant le raccord central (40), qui sont disposées à distance l'une de l'autre et forment une zone d'entrée entourant le noyau du raccord et oblique par rapport à l'axe longitudinal de la filière (29) comme dispositif de guidage pour la matière plastique devant être déviée du jeu annulaire (37).

2. Dispositif selon la revendication 1, **caractérisé en ce que** le noyau de filière (31), en tant que dispositif de guidage pour la matière plastique déviée et devant être amenée au canal de sortie (45), comporte au moins un alésage transversal (53) comme raccord entre le jeu annulaire (37) entourant le noyau de filière (31) et le canal de sortie (45) respectif.

3. Dispositif selon la revendication 1 ou 2, **caractérisé en ce que** la matière plastique devant être déviée du jeu annulaire (37) accède au canal de sortie (45) par l'intermédiaire de passages correspondants dans le noyau du raccord (40).

4. Dispositif selon l'une des revendications 1 à 3, **caractérisé en ce que** la pointe noyau (33) possède, dans sa zone d'extrémité située en amont, un diamètre légèrement plus important que la partie de raccordement du noyau de filière (31), de manière à former un rétrécissement (39) dans le jeu annulaire (37) au niveau du point d'entrée de la matière plastique devant être déviée.

5. Dispositif selon l'une des revendications 1 à 4, **caractérisé en ce que** le noyau de filière (31) comporte des deux côtés, outre le canal de sortie (45), des ouvertures de sortie (47) pour l'air de maintien.

6. Dispositif selon la revendication 5, **caractérisé en ce que** le noyau du raccord (40) de la pointe noyau (33) comporte des lignes d'embranchement (49) pour relier un canal d'amenée d'air central (51) avec les ouvertures de sortie (47).

7. Dispositif selon l'une des revendications 1 à 6, **caractérisé en ce que**, comme dispositif de soudage et de moulage est prévu un moule de soufflage (5, 7, 13), que le tube (3) peut être extrudé par le dispositif d'extrusion (1) par le haut dans le moule de soufflage ouvert (5), que, lors de l'extrusion, l'extrémité avant du tube (3) et l'extrémité avant de chaque paroi interne (21) est soudée avec chaque paroi (21) lors de la fermeture du moule de soufflage (5) par les bords de soudage (7) situés côté fond de celui-ci, pour fermer le fond du récipient relié à chaque paroi, et que, au niveau du moule de soufflage (5) des mâchoires de soudage (13) supérieures amovibles sont prévues, pour finir de mouler le col du récipient (57) formé lors de la fermeture du moule de soufflage (5) au niveau de l'extrémité supérieure de celui-ci et, le cas échéant, le fermer par soudage.
